# EUROPÄISCHE PATENTSCHRIFT

(11) **EP 1 677 937 B1**
(45) Veröffentlichungstag und Bekanntmachung des Hinweises auf die Patenterteilung: **14.09.2011**
(21) Anmeldenummer: 04766825.6
(22) Anmeldetag: 20.09.2004
(51) Int. Cl.: B23F 19/10, B23Q 1/48

(54) **WERKZEUGMASCHINE, INSBESONDERE ABDACHMASCHINE**
MACHINE-TOOL IN PARTICULAR CHAMFERING MACHINE
MACHINE-OUTIL A SYSTEME D'USINAGE PAR INCLINAISON

(30) Priorität: 10.10.2003 DE 10347149; 20.11.2003 DE 10354395
(43) Veröffentlichungstag der Anmeldung: 12.07.2006
(60) Teilanmeldung: 11156774.9
(73) Patentinhaber: Profilator GmbH & Co. KG, 42329 Wuppertal (DE)
(72) Erfinder: STRAUCH, Martin, D-42349 Wuppertal (DE); PROCK, Erich, D-40227 Düsseldorf (DE)
(74) Vertreter: Grundmann, Dirk
(86) Internationale Anmeldenummer: PCT/EP2004/052242
(87) Internationale Veröffentlichungsnummer: WO 2005/037477

(56) Entgegenhaltungen:
- EP-A- 0 443 814
- DE-A- 3 310 000
- DE-A- 4 319 326
- DE-A- 10 113 653

## Beschreibung

Die Erfindung betrifft eine Werkzeugmaschine gemäß Gattungsbegriff des Anspruchs 1.

Aus der DE 101 13 653 A1 ist eine Werkzeugmaschine bekannt, bei der das Werkstück von einem elektrischen Drehantrieb angetrieben wird. Das Werkzeug wird ebenfalls von einem elektrischen Drehantrieb angetrieben. Zur Positionierung des elektrischen Drehantriebs der Werkzeugspindel sind zwei Linearantriebe vorgesehen.

Die DE-AS 10 48 762 zeigt eine Werkzeugmaschine mit zwei Werkzeuganordnungen, jede Werkzeuganordnung ist um eine ihr zugeordnete Schwenkachse schwenkbar. Das Schwenken muss hier per Hand erfolgen.

Ferner ist eine Zahnkantenbearbeitungsmaschine vorbekannt, bei der mit elf Freiheitsgraden das Werkzeug und das Werkstück gegeneinander verlagerbar sind. Auch hier sind zum Schwenken und Neigen der Drehantriebe vorgesehen.

Die EP 0107 826 beschreibt eine Werkzeugmaschine, bei der die Werkzeuganordnungen ihre Schwenklage gegenüber der Werkstückspindel ändern können. Dies muss hier manuell erfolgen.

Für eine CNC-gesteuerte Werkzeugmaschine ist das exakte und reproduzierbare Zustellen der Werkzeuge von großer Bedeutung. Dabei müssen die Werkzeugspindeln eine exakte Raumstellung einnehmen. Die Verwirklichung der hierzu erforderlichen Verstellgetriebe durch Schneckenantriebe ist aufwendig, spielbehaftet und demnach ungenau.

Der Erfindung liegt die Aufgabe zugrunde, die gattungsgemäße Werkzeugmaschine sowohl herstellungstechnisch als auch gebrauchsvorteilhaft weiterzubilden.

Gelöst wird die Aufgabe durch eine Werkzengmaschine mit den Merkmalen des Anspruchs 1. Die abhängigen Ansprüche betreffen Weiterbildungen der Erfindung.

Erfindungsgemäß ist zunächst vorgesehen, dass die Positionierung der Werkzeugspindel oder gegebenenfalls der ein oder mehreren diese tragenden Träger ausschließlich von Linearantrieben erfolgt. Auch die Schwenkbewegungen, die die Werkzeugspindel bzw. ein oder mehrere der sie tragenden Träger vollführen, werden von Linearantrieben angetrieben. Hierzu bilden die gegeneinander zu verschwenkenden Maschinenteile Hebelarme aus, zwischen denen sich die Linearantriebe erstrecken. Bei der Wahl der Länge der Hebelarme wird erfindungsgemäß so vorgegangen, dass die Längen der Hebelarme gleich groß sind, so dass der Linearantrieb momentenfrei dort angreifen kann. Es ist aber auch vorgesehen, die Winkelstellung der Werkzeugspindel oder eines der sie tragenden Trägers durch die Verwendung zweier parallel zueinander liegender Linearantriebe einzustellen. Bei dieser Variante ist es zudem möglich, durch Synchronbetätigung beider Linearantriebe in die gleiche Richtung, eine Linearverlagerung der Werkzeugspindel oder eines sie tragenden Trägers zu verwirklichen. Besonders vorteilhaft für das exakte und reproduzierbare Zustellen der Werkzeuge ist das "In-der-Regelung-halten" der Linearantriebe in ihrer Arbeitsstellung. Obwohl diese Zustellachsen in der Arbeitsstellung bis auf die Vorschubachse nicht betätigt werden, werden sie angeklemmt in der Regelung gehalten. Dies hat zur Folge, dass in der Massen- oder Serienproduktion die Rüstzeiten bei einem Werkstückwechsel erheblich reduziert sind. Mit der erfindungsgemäßen Vorrichtung bzw. dem Verfahren kann mit einem Standardwerkzeug, beispielsweise mit einem Einzahnschlagmesser mit einer 90° zur Drehachse abragenden gradlinig verlaufenden Schneide gearbeitet werden. Mit diesem Standardwerkzeug können Flächen mit unterschiedlicher Neigung und Größe an unterschiedlichen Werkzeugen gefräst werden. Das Umrüsten besteht dann im Wesentlichen nur noch darin, die Einstellwerte für das neue Werkstück einzugeben. Da die Achsen reproduzierbar die verschiedenen, jedem Werkstück zugeordneten Arbeitsstellungen anfahren können, sind manuelle Korrekturen - wenn überhaupt - nur in sehr geringem Umfange erforderlich. Der erfindungsgemäße Aufbau der Werkzeugmaschine erlaubt es zudem, in Simulationsrechnungen gewonnene Einstelldaten für die Raumlage und die Raumrichtung der Werkstückspindel zu verwenden. Diese Einstelldaten werden in die elektronische Steuereinrichtung eingegeben. Anhand der in der elektronischen Recheneinheit hinterlegten geometrischen Angaben errechnet diese dann die Einstellwerte für die Linearantriebe. Ist der Linearantrieb beispielsweise als Spindel ausgebildet, wobei entweder die Spindelmutter oder die Gewindespindel drehangetrieben ist, wird in der Arbeitsstellung der Drehantrieb für entweder die Spindelmutter oder die Gewindespindel nicht mechanisch gebremst, sondern elektronisch in einer definierten Drehstellung gehalten. Die Einstellwerte für die einzelnen Linearantriebe sind jedoch vorzugsweise Strecken. Diese Strecken werden von einer elektronischen Recheneinheit der elektronischen Steuereinheit berechnet. Ausgangspunkt für die Berechnung sind vom Bediener eingegebene Kenndaten für die zu bearbeitende Fläche, beispielsweise die Lage der zu bearbeitenden Fläche im Raum, insbesondere betreffend ein durch die Werkstückachse definiertes Bezugssystem. Ausgehend von dieser Eingangsgröße wird die Arbeitsstellung der Schneide des Werkzeuges berechnet, also deren Raumposition und die zugehörigen Winkel, die die Raumrichtung der Werkzeugspindel definieren. Mit den aus der Konstruktion der Maschine her bekannten Längenmaße können dann die Strecken berechnet werden, auf welche die Linearantriebe eingestellt werden. Die Verwendung von Strecken als Einstellwerte bringt in Kombination mit der Verwendung der Linearantriebe die Möglichkeit, die Werkzeugspindel in die zuvor errechnete Raumposition zu bringen. Es ist vorteilhaft, wenn zumindest die die Positionierung der Werkzeugspindel in den zwei die Raumrichtung definierenden Raumwinkel mittelst Spindelantrieben erfolgt. Auch hier wird die Drehstellung der Spindel bzw. der Spindelmutter in der Arbeitsstellung mittels Regelung gehalten. Bevorzugt besitzt die Vorrichtung einen Werkzeugträgerturm, der zumindest in einer Raumrichtung linear verlagerbar ist. Um eine dazu senkrecht stehende Achse kann der Werkzeugträgerturm geschwenkt werden. Ein von dem Werkzeugträgerturm getragene Werkzeugspindelträger kann in Richtung der Werkzeugträgerachse linear verlagert werden. Um eine quer zur Werkzeugträgerturmachse liegenden Neigungsachse kann der Werkzeugspindelträger geschwenkt werden. Die Werkzeugspindel kann entlang ihrer Achse linear verschieblich auf dem Werkzeugspindelträger angeordnet sein. Die Linearverlagerungen von Werkzeugträgerturm und Werkzeugspindelträger können ebenfalls von Spindeltrieben verwirklicht sein. Auch hier wird die Drehstellung der Spindel bzw. der Spindelmutter in der Arbeitsstellung mittels Regelung gehalten. Auch wenn die vom Bediener in die Maschine eingegebenen Vorgaben Winkelangaben enthalten, so rechnet die elektronische Recheneinheit dennoch daraus Strecken, die als Einstellwerte an die Linearantriebe gegeben werden. Den Linearantrieben sind deshalb Weggeber zugeordnet, um die Einstellung vornehmen zu können. Gleichwohl besitzen die Antriebsmotoren oder Antriebsuntersetzungsgetriebe Drehgeber, so dass auch mit den von dort gegebenen Drehwinkeln die Streckenlänge bestimmbar ist.

In einer Variante ist zunächst und im Wesentlichen vorgesehen, dass zwei Antriebe, in der im Wesentlichen quer zur Achsrichtung der Werkzeugspindel verlaufenden Richtung parallel zueinander sich erstrecken, Linearantriebe, insbesondere Spindeln ausbilden, wobei jede Lineareinheit einen entlang seiner Erstreckungsrichtung positionierbaren Schlitten trägt, wobei dem einen Schlitten der erste Schwenkpunkt und dem anderen Schlitten der zweite Schwenkpunkt zugeordnet ist und der zweite Schwenkpunkt über eine Linear - insbesondere Kulissenführung mit der Werkzeuganordnung verbunden ist. In einer Weiterbildung der Erfindung ist vorgesehen, dass die Linearantriebe Gewindespindeln ausbilden, die von elektrischen Einzelantrieben antreibbar sind und die Spindelmuttern den Spindelschlitten zugeordnet sind. Ferner kann vorgesehen sein, dass die Werkzeugspindel entlang ihrer Achsrichtung auf einem um den ersten Lagerpunkt schwenkbar gelagerten, der Werkzeuganordnung zugeordneten Träger linearverlagerbar ist. In einer Weiterbildung ist vorgesehen, dass die Linearantriebe an einem um eine parallel zu ihrer Achse verlaufenden Achse drehbaren Turm angeordnet sind. Auch der Turm kann mittelst eines Linearantriebes, bspw. eines Spindelantriebes drehbar sein. Ferner kann der Turm in einer Richtung quer zur Werkstückachsenrichtung und quer zur Spindelerstreckungsrichtung über einen Spindelantrieb gegenüber dem Maschinenbett verlagerbar sein. Die Spindelantriebe sind vorzugsweise Kugelrollenspindelantriebe mit vorgespannten Lagern. Dies hat Spielfreiheit zur Folge. Mit der zuvor beschriebenen Vorrichtung lässt sich eine Werkzeugspindel durch Synchronbetätigung aller Spindelantriebe im Raum verlagern. Mit der Vorrichtung lässt sich auch durch Betätigungen von nur einem Spindelantrieb die Werkzeuganordnung um einen der beiden Schwenkpunkte drehen. Als besonders vorteilhaft wird es angesehen, dass durch gleichzeitige Betätigung beider Spindeln mit unterschiedlichen Drehzahlen die Werkstückspindel bzw. die Werkzeuganordnung um einen virtuellen Drehpunkt geschwenkt werden kann. Der virtuelle Drehpunkt kann dabei der Angriffspunkt des von der Werkzeugspindel gedrehten Schlagmessers an einem Zahnrad sein. In einer bevorzugten Ausgestaltung besitzt die Werkzeugmaschine zwei klappsymmetrisch angeordnete Türme, die jeweils zwei Spindeln und je eine auf den beiden Spindeln sitzende Werkzeuganordnungen aufweisen.

Betreffend die Funktionsweise einer derartigen aus drei Spindeln bestehenden Maschine, bei der die Antriebsmotoren der einzelnen Spindeln im Gleichlauf miteinander stehen, wird auf die EP 0107 826 bzw. die DE 10113 653 A1 verwiesen.

Ein Ausführungsbeispiel der Erfindung wird nachfolgend anhand beigefügter Zeichnungen erläutert Es zeigen:

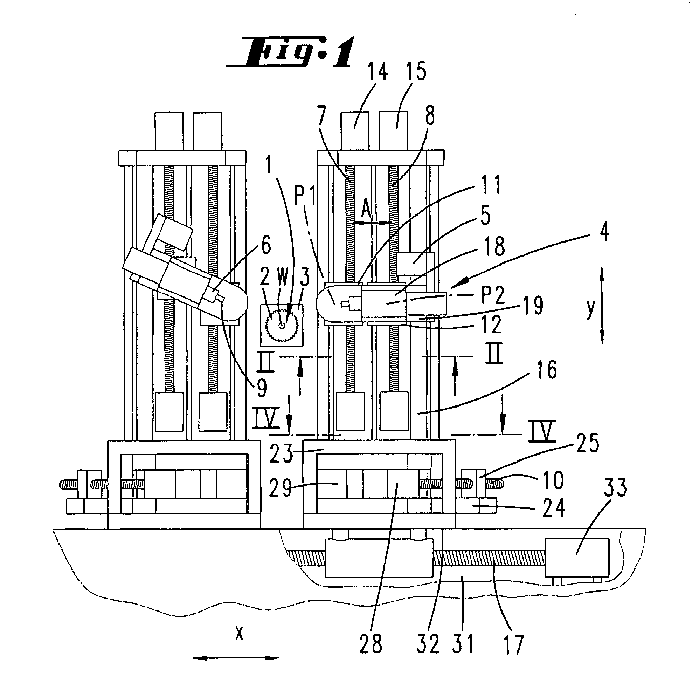

- Fig. 1: in grob schematischer Darstellung in der Ansicht ein Ausführungsbei- spiel einer Werkzeugmaschine,

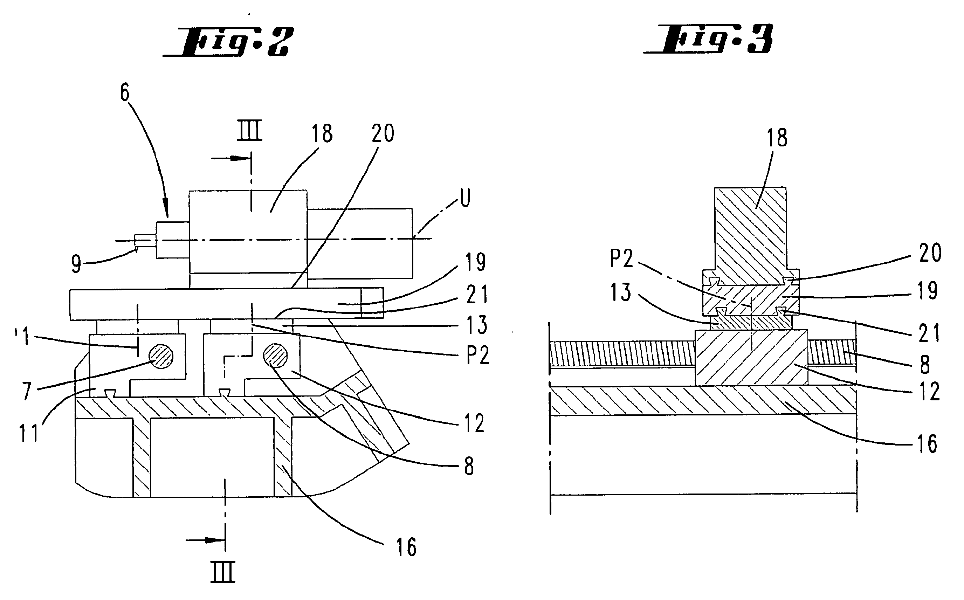

- Fig. 2: eine Detailansicht einer Werkzeuganordnung in Blickrichtung der Pfei- le II-II in Figur 1,
- Fig. 3: eine Detaildarstellung einer Führung im Bereich des zweiten Drehla- gers entlang der Schnittlinie III-III in Figur 2,

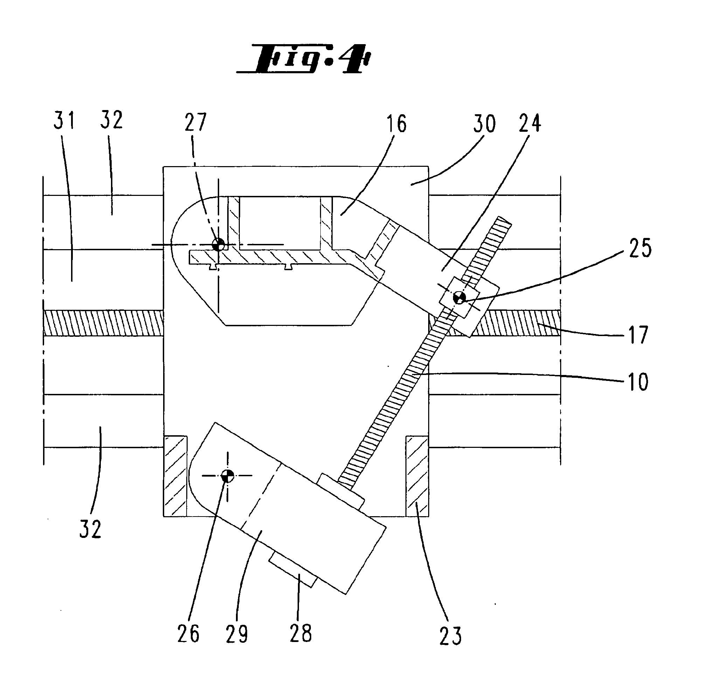

- Fig. 4: eine Detaildarstellung des Drehlagers des Turmes 16 auf einer Grund- platte 30 in der Draufsicht gemäß der Linie IV-IV in Figur 1 und

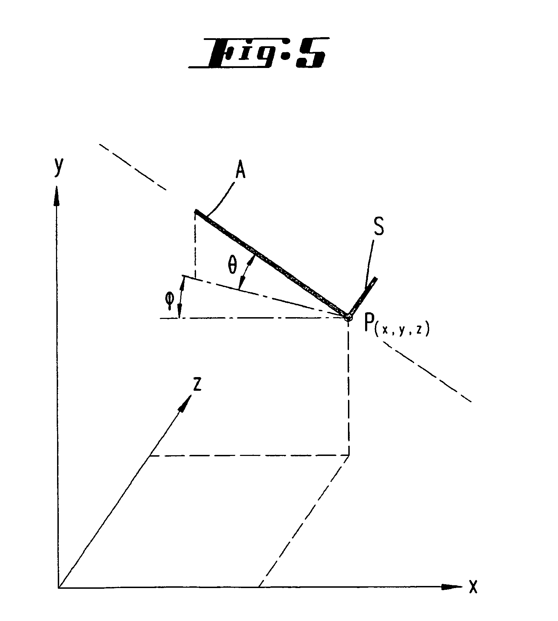

- Fig. 5: schematisch die die Lage der Werkzeugspindel A bzw. der Schneide S definierenden Parameter in schematischer Darstellung.

Die Werkzeugmaschine dient der Erzeugung von Abdachungen an den Stirnflächen von Zahnrädern 2. Dabei wird ein Zahnrad 2 von einem Futter einer Werkstückspindel 1 gehalten. Die Werkstückspindel, die sich um die Achse W dreht, verläuft in der Z-Achse und wird von einem Antriebsmotor 3 angetrieben.

Die Abdachungen der Stirnflächen der Zahnräder 2 erfolgt durch Synchronearbeitung mittels Schlagmessern 9. Es sind zwei Schlagmesser 9 vorgesehen, die jeweils auf einer Werkstückspindel 6 angeordnet sind. Auf der Werkstückspindel 6 können aber auch Mehrzahnschlagmesser angeordnet sein. Jede der beiden Werkzeugspindeln 6 ist dabei einer Werkzeuganordnung 4 zugeordnet, Die Werkzeuganordnung 4 besitzt einen Spindelkasten 18 und einen Antriebsmotor 5. Die Antriebsmotoren 5 der beiden Werkzeuganordnungen 4 sind mit dem Antriebsmotor 3 der Werkstückspindel 1 synchronisiert Sie stehen in einem festen Drehzahlverhältnis zueinander.

Das Maschinenbett 31 der Werkzeugmaschine bildet eine Horizontalführung 32 aus. Auf dieser Horizontalführung 32 ist eine Grundplatte 30 in Richtung X verlagerbar. Hierzu dient eine fest im Maschinenbett 31 gelagerte Kugelrollenspindel 17, die von einem Spindelantrieb 33 angetrieben wird. Unterhalb der Grundplatte 30 befindet sich die Spindelmutter, so dass durch Betätigung des Spindelantriebs 33 die Grundplatte 30 in Richtung Y verlagert werden kann.

Fest mit der Grundplatte 30 verbunden ist ein torförmiger Körper 23. Dieses Tor 23 lagert einen Ausleger 29, der um ein Drehlager 26 schwenkbar ist. Das freie Ende des Auslegers 29 trägt einen Spindelantrieb 28, dessen Spindel 10 an einem Arm 24 eines Turmes 16 angreift. Der Arm 24 des Turmes 16 trägt ein Drehlager 25, welches die Spindelmutter für die Spindel 10 ausbildet. Der Turm 16 ist um ein Drehlager 27, welches sich in der X-Richtung erstreckt, schwenkbar. Durch Betätigung des Spindelantriebes 28 kann der Turm 16 um die in der X-Achse verlaufende Schwenkachse, die durch das Drehlager 27 definiert ist, gedreht werden. Dabei wird der Turm 16 von der Grundplatte 30 getragen.

Der Turm 16 trägt zwei zueinander parallele Kugelrollenspindeln 7,8. Diese beiden Gewindespindeln 7,8 erstrecken sich in derY-Richtung. Auf dem Kopf des Turmes 16 befinden sich die beiden elektrischen Einzelantriebe 14, 15 für die beiden mit einem Abstand A voneinander beabstandeten Kugelrollenspindeln 7, 8.

Jede der beiden Kugelrollenspindeln 7, 8 trägt einen Spindelschlitten 11, 12. Jeder Spindelschlitten 11, 12 ist zusätzlich noch an einer Führungsschiene des Turmes 16 geführt. Durch Drehen der Gewindespindeln 7, 8 kann der zugeordnete Spindelschlitten in Y-Richtung verlagert werden. Dem Spindelschlitten 11 ist ein erstes Drehlager P1 zugeordnet, welches werkzeugseitig einer Werkzeuganordnung 4 angeordnet ist. Der der Kugelrollenspindel 8 zugeordnete Spindelschlitten 12 trägt ein zweites Drehlager P2, welches der Antriebsseite der Werkzeuganordnung 4 zugeordnet ist. Ein Träger 19 sitzt schwenkbar um das Drehlager P1 auf dem Spindelschlitten 11. An einer doppelten Führung 21 des Trägers 19 sitzt eine Kulissenführung 13, die dem Spindelschlitten 12 zugeordnet ist. Diese Kulissenführung 13 ist um den zweiten Lagerpunkt P2 schwenkbar. Dies hat zur Folge, dass sich bei einer Schwenkung des Trägers 19 um den ersten Lagerpunkt P1 der zweite Lagerpunkt P2 relativ vom ersten Lagerpunkt P1 entfernen kann. Hierbei gleitet die Führung 21 des Trägers 19 in der Kulisse 13. Diese schwenkt dabei um den zweiten Lagerpunkt P2.

Der Träger 19 besitzt nicht nur auf seiner Unterseite Führungen 21, sondern auch auf seiner Oberseite Führungen 20. Beide Führungen 21, 20 verlaufen parallel zueinander und in Erstreckungsrichtung des Trägers 19. Auf der oberseitigen Führung 20 sitzt der Spindelkasten 18 einer Werkzeuganordnung 4 derart, dass das Werkzeug 9 entlang seiner Drehachse U verlagert werden kann. Auch diese Verlagerung erfolgt durch einen Linearantrieb in Form einer Kugelrollenspindelanordnung. Das Werkzeug 9 sitzt dabei auswechselbar in einem Futter der Werkzeugspindel 6.

Die Werkzeugmaschine weist zwei klappsymmetrisch zueinander angeordnete Werkzeuganordnungen 4, die jeweils einem Turm 16 zugeordnet sind, auf. Hervorzuheben ist, dass beim Ausführungsbeispiel sämtliche Drehantriebe über Linearantriebe verwirklicht sind. Die Linearantriebe sind dabei durch eine entsprechende Verspannung der Lager, insbesondere Kugellager spielfrei. Um die Werkzeuge rechnergesteuert zu positionieren, sind die Linearantriebe mit Linearweggebern versehen. Die jeweiligen ersten Lagerpunkte P1 besitzen Drehgeber 22. Mit der beschriebenen Anordnung ist eine Positionierung der Werkzeuganordnung 4 um jede virtuelle Raum-Drehachse möglich. Die Werkstückspindel 1 kann auch in ihrer Achsrichtung W zum Zwecke der Zustellung oder des Vorschubes verlagert werden. Die Verlagerung der Werkzeugspindel 6 gegenüber dem Träger 19 kann ebenfalls zum Zwecke des Vorschubes oder zum Zwecke der Zustellung erfolgen.

Die beschriebene Werkzeugmaschine ist in der Lage verschiedenartige Werkstücke zu bearbeiten. Im Wesentlichen handelt es sich bei diesen Werkstücken um verzahnte Werkstücke, insbesondere Zahnräder. In die Zahnflanken dieser Zahnräder sollen in entsprechender Teilung umfangsversetzt gleichartige Flächen gefräst werden. Die Vorrichtung ist insbesondere dazu in der Lage, ein schnell auf die Bearbeitung eines andersgestalteten Werkstückes umzustellen. Bei dieser Umstellung muss die Werkzeugspindel in eine andere Arbeitsstellung zum Werkstück gebracht werden. Das bedeutet, die Schneide des Werkzeuges muss in eine andere, durch die drei Raumrichtungen X, Y, Z definierte Lage gebracht werden und in eine andere, durch die beiden Raumwinkel e und ϕ definierte Raumrichtung verschwenkt werden. Die diese Stellung bestimmenden geometrischen Parameter sind zuvor berechnet worden. Ausgehend dieser, die Raumlage der Werkzeugspindel definierenden Koordinaten X, Y, Z, θ,ϕ werden Einstellwerte für die insgesamt vierzehn Linearachsen berechnet. Dies erfolgt unter Berücksichtigung der konstruktiven Längenmaße der Maschine. Die Einstellwerte, die von einer elektronischen Steuereinrichtung an die Linearantriebe gegeben werden, sind Streckenmaße. Haben die pro Werkzeugspindel fünf Einstellachsen ihrer Endposition erreicht, ist die Arbeitsstellung angefahren. In dieser Stellung werden die Linearantriebe nicht reibschlüssig geklemmt oder formschlüssig gehalten, sondern durch ständiges Nachregeln fixiert.

Die erfindungsgemäße Vorrichtung hat bevorzugt zwei, im Wesentlichen spiegelsymmetrisch angeordnete Werkzeugspindeln. Die diesen Spindeln zugeordneten Schneiden bearbeiten jeweils eine ihnen zugeordnete Fläche, wobei die beiden Flächen dachartig zueinander stehen.

## Patentansprüche

1. Werkzeugmaschine mit einer drehantreibbaren Werkstückspindel (1) und mit mindestens einer um einen Schwenkpunkt (P1) schwenkbaren Werkzeuganordnung (4) mit einer mit der Werkstückspindel (1) synchronisiert drehantreibbaren Werkzeugspindel (6), wobei die Werkzeugspindelanordnung (4) mittelst eines ersten Antriebs (7) in einer Richtung (y) im Wesentlichen quer zur Achsrichtung (z) der Werkstückspindel (1) verlagerbar ist und in einen Abstand (A) zum Schwenkpunkt (P1) an einem zweiten Schwenkpunkt (P2) der Werkzeuganordnung (4) ein zweiter Antrieb (8) zum Einstellen der Schwenkstellung angreift, **dadurch gekennzeichnet, dass** die beiden Antriebe (7,8) zwei in der im Wesentlichen quer zur Achsrichtung (z) der Werkstückspindel (1) verlaufenden Richtung (y) parallel zueinander sich erstreckende Linearantriebe (7, 8) sind, wobei jeder Linearantrieb (7, 8) einen entlang seiner Erstreckungsrichtung (y) positionierbaren Schlitten (11,12) trägt, wobei dem einen Schlitten (11) der erste Punkt (P1) und dem anderen Schlitten (12) der zweite Schwenkpunkt (P2) zugeordnet ist und der zweite Schwenkpunkt (P2) über eine Linear- insbesondere eine Kulissenführung (13) mit der Werkzeuganordnung (4) verbunden ist.

2. Werkzeugmaschine nach Anspruch 1, **dadurch gekennzeichnet, dass** die Linearantriebe Spindeln (7, 8) mit elektrischen Einzelantrieben (14, 15) sind und die Spindelmuttern den Schlitten (11,12) zugeordnet sind.

3. Werkzeugmaschine nach einem der Ansprüche 1 oder 2, **dadurch gekennzeichnet, dass** die Werkzeugspindel (6) entlang ihrer Achsrichtung (U) auf einem um den ersten Schwenkpunkt (P1) schwenkbar gelagerten, der Werkzeuganordnung (4) zugeordneten Träger (19) linearverlagerbar ist.

4. Werkzeugmaschine nach einem der Ansprüche 1 bis 3, **dadurch gekennzeichnet dass** die Spindeln (7, 8) an einem um eine parallel zur Spindelachse verlaufenden Achse drehbar gelagerten Turm (16) angeordnet sind.

5. Werkzeugmaschine nach Anspruch 4, **dadurch gekennzeichnet, dass** der Turm (16) mittelst eines Spindelantriebes (10) drehbar ist.

6. Werkzeugmaschine nach einem der Ansprüche 4 oder 5, **dadurch gekennzeichnet, dass** der Turm (16) in einer Richtung (x) quer zur Werkstückachsenrichtung (z) und quer zur Spindelerstreckungsrichtung (U) über einen Spindelantrieb (17) gegenüber dem Maschinenbett (31) verlagerbar ist.

7. Werkzeugmaschine nach einem der Ansprüche 1 bis 6, **gekennzeichnet durch** eine zu einer die Achse (U) der Werkstückspindel (1) schneidenden, in Y-Richtung verlaufenden Linie im Wesentlichen klappsymmetrische Anordnung zweier Werkzeugspindeln (6).

8. Werkzeugmaschine nach einem der Ansprüche 1 bis 7, **dadurch gekennzeichnet, dass** die Spindelantriebe Kugelrollenspindelantriebe sind mit vorgespannten Lagern.

9. Werkzeugmaschine nach einem der Ansprüche 1 bis 8, **gekennzeichnet durch** einen dem Drehlager des ersten Lagerpunktes (P1) zugeordneten Drehgeber (22).

## Claims

1. Machine tool comprising a workpiece spindle (1) which can be driven in rotation and comprising at least one tool arrangement (4), pivotable about a pivot point (P1), comprising a tool spindle (6) which can be driven in rotation synchronously with the workpiece spindle (1), the tool spindle arrangement (4) being displaceable in a direction (y) substantially transverse to the axial direction (z) of the workpiece spindle (1) by means of a first drive (7), and a second drive (8) for adjusting the pivot position engaging, at a distance (A) from the pivot point (P1), on a second pivot point (P2) of the tool arrangement (4), **characterised in that** the two drives (7, 8) are two linear drives (7, 8) extending mutually parallel in the direction (y) extending substantially transverse to the axial direction (z) of the workpiece spindle (1), each linear drive (7, 8) carrying a slide (11, 12) which can be positioned along the extension direction (y) thereof, the first pivot point (P1) being associated with one slide (11) and the second pivot point (P2) being associated with the other slide (12), and the second pivot point (P2) being connected to the tool arrangement (4) via a linear guide (13), in particular a slide guide.

2. Machine tool according to claim 1, **characterised in that** the linear drives are spindles (7, 8) having individual electric drives (14, 15) and the spindle nuts are associated with the slides (11, 12).

3. Machine tool according to either claim 1 or claim 2, **characterised in that** the tool spindle (6) is linearly displaceable in the axial direction (U) thereof on a carrier (19), which is pivotably mounted about the pivot point (P1) and associated with the tool arrangement (4).

4. Machine tool according to any one of claims 1 to 3, **characterised in that** the spindles (7, 8) are arranged on a tower (16) which is mounted so as to be rotatable about an axis extending parallel to the spindle axis.

5. Machine tool according to claim 4, **characterised in that** the tower (16) can be rotated by means of a spindle drive (10).

6. Machine tool according to either claim 4 or claim 5, **characterised in that** the tower (16) is displaceable relative to the machine foundation (31) in a direction (x) transverse to the workpiece axis direction (z) and transverse to the spindle extension direction (U) by means of a spindle drive (17).

7. Machine tool according to any one of claims 1 to 6, **characterised by** an arrangement of two tool spindles (6) which is substantially mirror-symmetric about a line extending in the Y-direction and intersecting the axis (U) of the tool spindle (1).

8. Machine tool according to any one of claims 1 to 7, **characterised in that** the spindle drives are ball caster spindle drives having biased bearings.

9. Machine tool according to any one of claims 1 to 8, **characterised by** a rotary encoder (22) associated with the pivot bearing of the first bearing point (P1).

## Revendications

1. Machine-outil, comprenant une broche porte-pièce (1) pouvant être entraînée en rotation et au moins un aménagement d'outil (4) pivotant autour d'un point pivot (P1) avec une broche d'outil (6) pouvant être entraînée en rotation avec la broche porte-pièce (1) de manière synchronisée, dans laquelle l'aménagement de broche d'outil (4) peut être déplacé au moyen d'une pemière commande (7) dans une direction (y) sensiblement transversale à la direction axiale (z) de la broche porte-pièce (1) et à une certaine distance (A) par rapport au point pivot (P1), une seconde commande (8) s'engage sur un second point pivot (P2) de l'aménagement d'outil (4) pour régler la position de pivotement, **caractérisée en ce que** les deux commandes (7,8) sont deux commandes linéaires (7, 8) s'étendant parallèlement l'une à l'autre dans la direction (y) sensiblementtransversaleàladirection axiale (z) de la broche porte-pièce (1), chaque commande linéaire (7, 8) portant un coulisseau (11,12) positionnable le long de sa direction d'extension (y), dans laquelle le premier point pivot (P1) est affecté à l'un des coulisseaux (11), tandis que le second point pivot (P2) est affecté à l'autre coulisseau (12) et le second point pivot (P2) est relié à l'aménagement d'outil (4) par le biais d'un guide linéaire, en particulier un guide à coulisse (13).

2. Machine-outil selon la revendication 1, **caractérisée en ce que** les commandes linéaires sont des broches (7, 8) avec des commandes individuelles électriques (14,15) et **en ce que** les écrous de broches sont affectés aux coulisseaux (11,12).

3. Machine-outil selon l'une quelconque des revendications 1 ou 2, **caractérisée en ce que** la broche porte-pièce (6) peut être déplacée de manière linéaire le long de sa direction axiale (U) sur un support (9) monté à pivotement autour du premier point pivot (P1) et affecté à l'aménagement d'outil (4).

4. Machine-outil selon l'une quelconque des revendications 1 à 3, **caractérisée en ce que** les broches (7,8) sont aménagées sur un tour (16) monté à rotation autour d'un axe s'étendant parallèlement à l'axe des broches.

5. Machine-outil selon la revendication 4, **caractérisée en ce que** le tour (16) peut tourner au moyen d'une commande de broche (10).

6. Machine-outil selon l'une quelconque des revendications 4 ou 5, **caractérisée en ce que** le tour (16) peut être déplacé en regard du socle de machine (31) dans une direction (x) transversale à la direction axiale (z) des pièces et transversale à la direction d'extension (U) des broches par le biais d'une commande de broche (17).

7. Machine-outil selon l'une quelconque des revendications 1 à 6, **caractérisée par** un aménagement des deux broches d'outil (6) sensiblement symétriques par rabattement par rapport à une ligne coupant l'axe (U) de la broche porte-pièce (1) et s'étendant dans la direction Y.

8. Machine-outil selon l'une quelconque des revendications 1 à 7, **caractérisée en ce que** les commandes de broches sont des commandes de broches filetées à billes avec des paliers précontraints.

9. Machine-outil selon l'une quelconque des revendications 1 à 8, **caractérisée par** un synchrotransmetteur (22)affecté au palier de rotation du premier point pivot (P1).
